# EUROPÄISCHE PATENTSCHRIFT

(11) **EP 1 614 915 B1**
(45) Veröffentlichungstag und Bekanntmachung des Hinweises auf die Patenterteilung: **29.10.2008**
(21) Anmeldenummer: 05013440.2
(22) Anmeldetag: 22.06.2005
(51) Int. Cl.: F16C 29/02, F16C 29/06

(54) **Linearlager**
Linear bearing
Palier linéaire

(30) Priorität: 07.07.2004 DE 102004032746
(43) Veröffentlichungstag der Anmeldung: 11.01.2006
(73) Patentinhaber: AB SKF, 415 50 Göteborg (SE)
(72) Erfinder: Drüegemöller, Andreas, 97456 Dittelbrunn (DE); Genheimer, Christian, 97422 Schweinfurt (DE)
(74) Vertreter: Kohl, Thomas

(56) Entgegenhaltungen:
- DE-A1- 3 429 692
- DE-A1- 3 435 593
- DE-A1- 4 227 604

## Beschreibung

Die Erfindung betrifft eine Linearlageranordnung, die einen ersten Tisch sowie einen zweiten Tisch aufweist, wobei der erste Tisch relativ zu dem zweiten Tisch linear verschieblich ist, wobei mindestens ein Gleitelement an einem der Tische angeordnet ist, das mit mindestens einer am anderen Tisch angeordneten Gleitfläche zusammenwirkt, und wobei beide Tische mindestens eine Laufbahn für Wälzkörper aufweisen und Wälzkörper zwischen diesen Laufbahnen angeordnet sind.

Kombinierte Linearführungen mit Gleit- und Wälzelementen sind im Stand der Technik bekannt. Eine Lageranordnung gemäß dem Oberbegriff des Anspruchs 1 ist aus DE 34 35 593 A1 bekannt. Die DE 34 35 593 A1 offenbart ein Maschinenelement, das als komplette, geschlossene Baueinheit für Maschinenführungen eingesetzt werden kann. Die Führungsbahn ist hier in eine Gleitführung zur Aufnahme der Hauptauflagekräfte und eine Wälzführung aufgeteilt, die die Führungsgenauigkeit ergibt.

Die DE 42 27 604 A1 offenbart eine Wälzkontakt-Linearführungseinheit, wobei an einem Schlitten ein erstes Gleitelement fixiert ist, um zwischen der Oberseite einer Schiene und einem ersten Gleitelement ein erstes Schmierfilm-Dämpfüngselement zu bilden. Am Schlitten ist ein zweites Gleitelement fixiert, um zwischen der Unterseite eines Flügelabschnitts und dem zweiten Gleitelement ein zweites Schmierfilm-Dämpfungselement zu bilden. Ferner sind mehrere Wälzkörper vorgesehen, die in einer Führungsnut angeordnet sind, um dadurch einen Wälzkontakt zwischen der Führungsschiene und dem Schlitten zu bilden.

Zwar ist es mit derartigen Linearführungen bereits möglich, eine gut gedämpfte Linearlageranordnung zu schaffen, die dennoch zur Aufnahme hoher Lagerkräfte geeignet ist. Allerdings reichen diese vorbekannten Lageranordnungen in manchen Anwendungsfällen nicht aus, bei denen es einerseits auf geringes Gewicht und geringe Herstellkosten und andererseits auf einen gewissen Komfort bei der Betätigung des Linearlagers ankommt. Beispielhaft seien hier verschiebbare Armauflagen im Automobilinnenraum genannt, die sehr leicht und kostengünstig sein müssen, bei denen jedoch beim Verschieben ein angenehmes Bewegungsverhalten angestrebt wird. Dies soll sich durch gute Dämpfeigenschaften auszeichnen, wobei jedoch dennoch sichergestellt sein muss, dass bei der Beaufschlagung der Linearlagereinheit durch hohe Kräfte diese zuverlässig aufgenommen werden können.

Der Erfindung liegt daher die **Aufgabe** zugrunde, eine Linearlageranordnung der eingangs genannten Art so weiterzubilden, dass sie die genannten Anforderungen erfüllt.

Die **Lösung** dieser Aufgabe durch die Erfindung ist dadurch gekennzeichnet, dass im im wesentlichen unbelasteten Zustand der Linearlageranordnung das mindestens eine Gleitelement an der mindestens einen Gleitfläche anliegt und so für eine lineare Führung beider Tische relativ zueinander sorgt und die Wälzkörper so ausgebildet sind, dass sie im im wesentlichen unbelasteten Zustand der Linearlageranordnung mit einem Spiel zwischen den Laufbahnen angeordnet sind.

Vorzugsweise beträgt das Spiel der Wälzkörper zu den Laufbahnen zwischen 0,05 mm und 1 mm.

Mit dieser Ausgestaltung wird erreicht, dass im unbelasteten bzw. nur gering belasteten Zustand der Linearanordnung nur die Gleitelemente zum Tragen kommen, d.h. es besteht nur Kontakt zwischen den Gleitelementen und der zugehörigen Gleitfläche, während keine Kraftübertragung über die Laufbahnen und die Wälzkörper erfolgt. Erst bei Beaufschlagung der Linearlageranordnung mit einer entsprechenden Kraft ergibt sich durch eine elastische Verformung zumindest einer der Tische, dass das im unbelasteten Zustand der Anordnung vorhandene Spiel überwunden wird und so Wälzkontakt zwischen den Laufbahnen und den Wälzkörpern vorliegt. In diesem, belasteten Zustand der Linearlageranordnung ist dann sowohl die Wälz- als auch die Gleitführung aktiv, so dass bei guter Dämpfungseigenschaft der Linearlageranordnung auch größere Kräfte übertragen werden können.

Besonders vorteilhaft macht sich dies bei verschiebbaren Armauflagen im Automobilinnenraum bemerkbar. Im unbelasteten Zustand ergibt sich eine gedämpfte reine Gleitführung, die ein komfortables und einfaches Verschieben der Linearlageranordnung ermöglicht. Im stark belasteten Zustand der Lageranordnung, beispielsweise beim Abstützen des Fahrers auf der Armauflage, kommt dann infolge der elastischen Durchbiegung zumindest einer der Tische die Wälzführung in Kontakt und sorgt für eine zuverlässige Aufnahme der Lagerkräfte.

Eine Weiterbildung sieht vor, dass der erste Tisch mittels zwei Gleitelementen über zwei Gleitflächen relativ zum zweiten Tisch gleitgelagert ist und die Laufbahnen in dem Bereich zwischen den beiden Gleitelementen angeordnet sind, vorzugsweise mittig zwischen den Gleitelementen. Dabei kann insbesondere vorgesehen sein, dass der erste Tisch im Bereich zwischen den beiden Gleitelementen plattenartig ausgebildet ist. Ferner hat es sich hier als vorteilhaft erwiesen, wenn der erste Tisch in seinem seitlichen Bereich Umgriffe aufweist, die sich seitlich erstreckende Führungsschienen des zweiten Tisches umfassen. Zwischen den Umgriffen und den Führungsschienen können dabei weitere Gleitelemente angeordnet sein, die mit weiteren Gleitflächen zusammenwirken.

Vorzugsweise liegen die Gleitelemente zu ihren jeweiligen Gleitflächen unter Vorspannung an, d.h. auch im unbelasteten Zustand der Linearlageranordnung ist eine spielfreie Führung des einen Tisches relativ zum anderen sichergestellt.

Um kostengünstig sicherzustellen, dass auch hohe Lagerbelastungen aufgenommen werden können, sieht eine Fortbildung vor, dass die Laufbahnen durch Blecheinlegeteile, insbesondere mit gehärteter Oberfläche, gebildet werden, die an den Tischen angeordnet sind.

Mit Vorteil ist der eine Tisch als Obertisch und der zweite Tisch als Untertisch ausgebildet. Der Tisch kann dabei aus Kunststoff oder Leichtmetall, insbesondere aus Aluminium oder Magnesium, bestehen. Als Wälzkörper haben sich Kugeln bewährt.

Mit dem erfindungsgemäßen Vorschlag wird eine Linearlageranordnung geschaffen, die die eingangs genannten Anforderungen vollumfänglich erfüllt.

Es ist eine hohe Kraftübertragung bei präziser Führung der beiden Tische relativ zueinander sichergestellt. Im unbelasteten Zustand bzw. im nur gering belasteten Zustand erfolgt eine Linearführung ausschließlich durch die Gleitelemente, während bei stärkerer Beaufschlagung der Linearlageranordnung zusätzlich die Wälzelemente zum Einsatz kommen. Insgesamt wird ein angenehmes Verschieben der Linearlageranordnung per Hand erreicht, das sich insbesondere beim Einsatz in verschiebbaren Armauflagen im PKW bewährt hat.

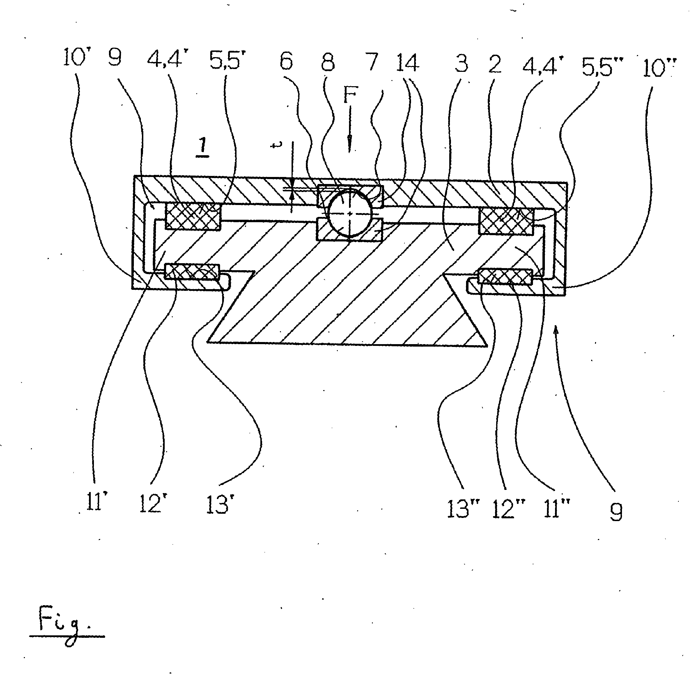

In der Zeichnung ist ein Ausführungsbeispiel der Erfindung dargestellt. Die einzige Figur zeigt schematisch den Schnitt durch eine Linearlageranordnung.

In der Figur erstreckt sich normal zur Zeichenebene die Verschieberichtung der Linearlageranordnung 1. Diese weist einen ersten Tisch 2 sowie einen zweiten Tisch 3 auf, die relativ zueinander linear verschieblich sind. Der als Obertisch ausgeführte erste Tisch 2 ist dabei im wesentlichen plattenartig ausgebildet und hat in seinen seitlichen Bereichen 9 Umgriffe 10' und 10", mit denen er seitlich herausragende Führungsschienen 11' bzw. 11" des zweiten Tisches 3 umfasst, der als Untertisch ausgebildet ist.

An den seitlich herausragenden Führungsschienen 11' bzw. 11" sind Gleitelemente 4' und 4" sowie weitere Gleitelemente 12' und 12" angeordnet und fest mit dem zweiten Tisch 3 verbunden. Die Gleitelemente 4', 4", 12', 12" wirken mit einer Gleitfläche 5' und 5" bzw. 13' und 13" zusammen, die am ersten Tisch 2 angeordnet sind. Infolge der Elastizität der Umgriffe 10', 10", ist es möglich, die Gleitelemente 4', 4", 12', 12" unter Vorspannung an den jeweiligen Gleitflächen 5', 5", 13', 13" anliegen zu lassen und so unter allen Betriebsbedingungen der Linearlageranordnung 1 sicherzustellen, dass Gleitkontakt vorliegt.

Im Bereich der Symmetrieachse der beiden Tische 2, 3 sind Blecheinlegeteile 14 angeordnet, die jeweils Laufbahnen 6 bzw. 7 für Kugeln 8 aufweisen. In der Figur ist der unbelastete Zustand der Linearlageranordnung 1 skizziert, d.h. die schematisch eingetragene Kraft F ist hier Null. Dabei liegt eine Ausbildung vor, gemäß der ein Spiel t zwischen der Kugel 8 und der einen Laufbahn 7 vorliegt. Das bedeutet, dass im unbelasteten Zustand der Linearlageranordnung 1 die aus den Bauteilen 6, 7 und 8 bestehende Wälzführung nicht im Eingriff ist.

Wird die Kraft F erhöht, biegt sich der plattenartig ausgebildete erste Tisch 2 elastisch durch, so dass das Spiel t überwunden wird und Kontakt zwischen beiden Laufbahnen 6 und 7 und der Kugel 8 vorliegt. Hierdurch wird die Wälzführung aktiv. Bei einer Bewegung des ersten Tisches 2 relativ zum zweiten Tisch 3 liegt dann eine kombinierte Gleit- und Wälzführung vor.

Bei Rücknahme der Kraft F federt der erste Tisch 2 elastisch in die in der Figur skizzierte Position zurück, so dass die Wälzführung 6, 7, 8 wiederum außer Eingriff gerät.

Insgesamt wird dadurch in einfacher Weise und kostengünstig eine Linearlageranordnung geschaffen, die eine kombinierte Wälz- und Gleitführung darstellt, wobei jedoch nur bei entsprechender Belastung die Wälzführung in Eingriff gerät. Bei geringen Belastungen der Linearlageranordnung (kleine Kräfte F) erfolgt die Linearführung ausschließlich durch die Gleitelemente 4, 5, 12', 12", 13', 13".

### Bezugszeichenliste

- 1: Linearlageranordnung
- 2: erster Tisch
- 3: zweiter Tisch
- 4, 4', 4": Gleitelement
- 5, 5', 5": Gleitfläche
- 6: Laufbahn
- 7: Laufbahn
- 8: Wälzkörper (Kugel)
- 9: seitlicher Bereich
- 10', 10": Umgriff
- 11', 11": Führungsschiene
- 12', 12": weiteres Gleitelement
- 13', 13": weitere Gleitfläche
- 14: Blecheinlegeteil

- t: Spiel
- F: Kraft

## Patentansprüche

1. Linearlageranordnung (1), die einen ersten Tisch (2) sowie einen zweiten Tisch (3) aufweist,
wobei der erste Tisch (2) relativ zu dem zweiten Tisch (3) linear verschieblich ist,
wobei mindestens ein Gleitelement (4) an einem der Tische (3, 2) angeordnet ist, das mit mindestens einer am anderen Tisch (2, 3) angeordneten Gleitfläche (5) zusammenwirkt, und
wobei beide Tische (2, 3) mindestens eine Laufbahn (6, 7) für Wälzkörper (8) aufweisen und Wälzkörper (8) zwischen diesen Laufbahnen (6, 7) angeordnet sind,
**dadurch gekennzeichnet,**
**dass** im unbelasteten Zustand der Linearlageranordnung (1) das mindestens eine Gleitelement (4) an der mindestens einen Gleitfläche (5) anliegt und so für eine lineare Führung beider Tische (2, 3) relativ zueinander sorgt und die Wälzkörper (8) so ausgebildet sind, dass im unbelasteten Zustand der Linearlageranordnung (1) ein Spiel (t) zwischen den Wälzkörpern (8) und der einen Laufbahn (6, 7) vorliegt und damit die Wälzführung nicht im Eingriff ist.

2. Linearlageranordnung nach Anspruch 1, **dadurch gekennzeichnet, dass** das Spiel (t) der Wälzkörper (8) zu den Laufbahnen (6, 7) zwischen 0,05 mm und 1 mm beträgt.

3. Linearlageranordnung nach Anspruch 1 oder 2, **dadurch gekennzeichnet, dass** der erste Tisch (2) mittels zwei Gleitelementen (4', 4") über zwei Gleitflächen (5', 5") relativ zum zweiten Tisch (3) gleitgelagert ist und die Laufbahnen (6, 7) in dem Bereich zwischen den beiden Gleitelementen (4', 4") angeordnet sind, vorzugsweise mittig zwischen den Gleitelementen (4', 4").

4. Linearlageranordnung nach Anspruch 3, **dadurch gekennzeichnet, dass** der erste Tisch (2) im Bereich zwischen den beiden Gleitelementen (4', 4") plattenartig ausgebildet ist.

5. Linearlageranordnung nach Anspruch 3 oder 4, **dadurch gekennzeichnet, dass** der erste Tisch (2) in seinem seitlichen Bereich (9) Umgriffe (10', 10") aufweist, die sich seitlich erstreckende Führungsschienen (11', 11") des zweiten Tisches (3) umfassen.

6. Linearlageranordnung nach Anspruch 5, **dadurch gekennzeichnet, dass** zwischen den Umgriffen (10', 10") und den Führungsschienen (11', 11 ") weitere Gleitelemente (12', 12") angeordnet sind, die mit weiteren Gleitflächen (13', 13") zusammenwirken.

7. Linearlageranordnung nach einem der Ansprüche 1 bis 6, **dadurch gekennzeichnet, dass** die Gleitelemente (4', 4", 12', 12") zu ihren Gleitflächen (5', 5", 13', 13") unter Vorspannung anliegen.

8. Linearlageranordnung nach einem der Ansprüche 1 bis 7, **dadurch gekennzeichnet, dass** die Laufbahnen (6, 7) durch Blecheinlegeteile (14), insbesondere mit gehärteter Oberfläche, gebildet werden, die an den Tischen (2, 3) angeordnet sind.

9. Linearlageranordnung nach einem der Ansprüche 1 bis 8, **dadurch gekennzeichnet, dass** der eine Tisch (2) als Obertisch und der zweite Tisch (3) als Untertisch ausgebildet ist.

10. Linearlageranordnung nach einem der Ansprüche 1 bis 9, **dadurch gekennzeichnet, dass** der Tisch (2, 3) aus Kunststoff oder Leichtmetall, insbesondere aus Aluminium oder Magnesium, besteht.

11. Linearlageranordnung nach einem der Ansprüche 1 bis 10, **dadurch gekennzeichnet, dass** die Wälzkörper (8) Kugeln sind.

## Claims

1. A linear bearing assembly (1) which has a first platen (2) and a second platen (3),
wherein the first platen (2) is displaceable linearly relative to the second platen (3),
wherein at least one slide element (4) is disposed on one of the platens (3,2) and co-operates with at least one slide surface (5) disposed on the other platen (2,3), and
wherein both platens (2,3) have at least one raceway (6,7) for rolling elements (8) and rolling elements (8) between these raceways (6,7),
**characterised in**
**that** in the unloaded state of the linear bearing assembly (1) the at least one slide element (4) bears on the at least one slide surface (5) and thus ensures linear guidance of both platens (2,3) relative to one another, and the rolling elements (8) are so formed that, in the unloaded state of the linear bearing assembly (1), a clearance (t) is present between the rolling elements (8) and one raceway (6,7) and thereby the rolling guide is not in engagement.

2. A linear bearing assembly according to Claim 1, **characterised in that** the clearance (t) of the rolling elements (8) relative to the raceways (6,7) is between 0.05 mm and 1mm.

3. A linear bearing assembly according to Claim 1 or 2, **characterised in that** the first platen (2) is mounted on plain bearings relative to the second platen (3) by means of two slide elements (4',4") via two slide surfaces (5',5"), and the raceways (6,7) are disposed in the region between the two slide elements (4',4"), preferably centrally between the slide elements (4',4").

4. A linear bearing assembly according to Claim 3, **characterised in that** the first platen (2) is of plate-like form in the region between the two slide elements (4',4").

5. A linear bearing assembly according to Claim 3 or 4, **characterised in that** in its lateral region (9) the first platen (2) has wrap-round portions (10',10") which comprise laterally extending guide rails (11',11") of the second platen (3).

6. A linear bearing assembly according to Claim 5, **characterised in that** between the wrap-round portions (10',10") and the guide rails (11',11") there are disposed further slide elements (12',12") which co-operate with further slide surfaces (13',13").

7. A linear bearing assembly according to any one of Claims 1 to 6, **characterised in that** the slide elements (4',4",12',12") are applied under preloading relative to their slide surfaces (5',5",13',13").

8. A linear bearing assembly according to any one of Claims 1 to 7, **characterised in that** the raceways (6,7) are,formed by sheet metal inserts (14), in particular with a hardened surface, which are provided on the platens (2,3).

9. A linear bearing assembly according to any one of Claims 1 to 8, **characterised in that** one platen (2) is in the form of an upper platen and the second platen (3) is in the form of a lower platen.

10. A linear bearing assembly according to any one of Claims 1 to 9, **characterised in that** the platen (2,3) consists of plastics material or light metal, in particular of aluminium or magnesium.

11. A linear bearing assembly according to any one of Claims 1 to 10, **characterised in that** the rolling bodies (8) are balls.

## Revendications

1. Palier linéaire (1) qui présente une première table (2) ainsi qu'une deuxième table (3), et dans lequel :
- la première table (2) peut coulisser linéairement par rapport à la seconde table (3),
- sur une des tables (3, 2) est disposé au moins un élément de glissement (4) qui coopère avec au moins une portée de glissement (5) prévue sur l'autre table (2,3),
- les deux tables (2, 3) présentent respectivement des pistes de roulement (6, 7) pour des corps de roulement qui sont disposés entre ces pistes (6, 7),
ce palier linéaire étant **caractérisé en ce que** quand il n'est pas chargé, au moins un élément de glissement (4) est appliqué sur au moins une portée de glissement (5) et veille ainsi à assurer un guidage linéaire des deux tables (2, 3) l'une par rapport à l'autre, et que les corps de roulement (8) sont constitués de manière que quand le palier (1) n'est pas chargé, il existe un jeu (t) entre les corps de roulement (8) et la piste de roulement (6, 7) de sorte que le guidage par roulement n'est pas en action.

2. Palier linéaire selon la revendication 1, **caractérisé en ce que** le jeu (t) des corps de roulement (8) par rapport aux pistes de roulement (6, 7) est compris entre 0,05 et 1 mm.

3. Palier linéaire selon la revendication 1 ou 2, **caractérisé en ce que** la première table (2) est capable de glisser par rapport à la seconde table (3) par l'intermédiaire d'éléments de glissement (4', 4") se déplaçant sur deux portées de glissement (5', 5") et que les pistes de roulement (6, 7) sont disposées dans la zone située entre les deux éléments de glissement (4', 4"), de préférence au milieu de cette zone.

4. Palier linéaire selon la revendication 3, **caractérisé en ce que** la première table (2) présente entre les deux éléments de glissement (4', 4") la forme d'une plaque.

5. Palier linéaire selon la revendication 3 ou 4, **caractérisé en ce que** la première table (2) présente, dans sa zone latérale (9), des rebords (10', 10") qui entourent les rails de guidage (11', 11") situés sur les côtés de la seconde table (3).

6. Palier linéaire selon la revendication 5, **caractérisé en ce qu'**entre les rebords (10', 10") et les rails de guidage (11', 11") sont disposés d'autres éléments de glissement (12', 12") qui coopèrent avec d'autres portées de glissement (13', 13").

7. Palier linéaire selon une des revendications 1 à 6, **caractérisé en ce que** les éléments de glissement (4', 4", 12', 12") ont leurs portées de glissement (5', 5", 13', 13") en précontrainte.

8. Palier linéaire selon une des revendications 1 à 7, **caractérisé en ce que** les pistes de roulement (6, 7) sont constituées par des inserts en tôle (14) qui sont montés dans les tables (2, 3) et qui présentent chacun notamment une surface durcie.

9. Palier linéaire selon une des revendications 1 à 8, **caractérisé en ce qu'**une table (2) constitue la table supérieure tandis que la seconde table (3) constitue la table inférieure.

10. Palier linéaire selon une des revendications 1 à 9, **caractérisé en ce que** chaque table (2, 3) est en matière plastique ou en métal léger, notamment en aluminium ou en magnésium.

11. Palier linéaire selon une des revendications 1 à 10, **caractérisé en ce que** les corps de roulement (8) sont des billes.
